# EUROPÄISCHE PATENTSCHRIFT

(11) **EP 0 802 376 B1**
(45) Veröffentlichungstag und Bekanntmachung des Hinweises auf die Patenterteilung: **23.06.1999**
(21) Anmeldenummer: 97105332.7
(22) Anmeldetag: 29.03.1997
(51) Int. Cl.: F24D 3/16, F24F 5/00, F28F 1/16, F28F 1/20

(54) **Wärmetauscherelement aus einem Aluminium-Strangpressprofil**
Heat exchanger element made of an extruded bar of aluminium
Elément pour échangeur de chaleur en profilé extrudé en aluminium

(30) Priorität: 19.04.1996 DE 19615419
(43) Veröffentlichungstag der Anmeldung: 22.10.1997
(73) Patentinhaber: KRANTZ - TKT GmbH, 51465 Bergisch Gladbach (DE)
(72) Erfinder: Reichel, Jürgen, Dipl.-Ing., 52078 Aachen (DE); Hirsch, Rolf, Dipl.-Ing., 52066 Aachen (DE); Nickel, Jürgen, Dipl.-Ing., 52072 Aachen (DE); Weck, Franz, Dipl.-Ing., 52134 Herzogenrath (DE)
(74) Vertreter: Bauer, Dirk, Dipl.-Ing. Dipl.-Kfm.

(56) Entgegenhaltungen:
- DE-A- 1 922 977
- FR-A- 1 111 140
- FR-A- 1 182 273
- GB-A- 289 927
- NL-A- 8 003 116

## Beschreibung

Die Erfindung betrifft ein Wärmetauscherelement aus einem Aluminium-Strangpreßprofil, worin mindestens eine mit einem Wärmetauschermedium beaufschlagbare Rohrleitung integrierbar ist. Die Mittelachse der Rohrleitung erstreckt sich in Längsrichtung des Aluminium-Strangpreßprofils, das mindestens ein dem Außenradius der Rohrleitung angepaßtes, schalenförmiges Kontaktstück aufweist.

Derartige Wärmetauscherelemente sind beispielsweise aus dem DE-U- 93 15 709.6 als Deckenprofile für eine Kühldecke bekannt. Durch diese soll aufsteigende warme Raumluft an der Raumdecke abgekühlt werden. Die dort mögliche großflächige Kühlung erlaubt relativ niedrige Luftströmgeschwindigkeiten und vermindert somit die Hauptnachteile konventioneller Klimaanlagen, die in der Regel weder völlig geräuschlos noch gänzlich zugfrei betrieben werden können.

Die als Deckenprofile für eine Kühldecke ausgebildeten bekannten Wärmetauscherelemente sind jeweils mit einem Stegabschnitt versehen, an welchem eine Haltevorrichtung angeformt ist, mit der das Wärmetauscherelement an einem Kühlrohr befestigt werden kann. Von den Längskanten des Stegabschnitts sind Schenkelabschnitte abgewinkelt. Dabei ist einer der zwei Schenkelabschnitte als Luftleitschenkel so in Richtung eines in Einbauposition nächstliegenden Wärmetauscherelements geneigt, daß zwischen den Deckenprofilen ein Luftkanal in Richtung auf das über dem nächstliegenden Wärmetauscherelement liegende Kühlrohr gebildet wird.

Mit der Ausbildung der die Kühlrohre verblendenden Wärmetauscherelemente als Luftleitprofile wird angestrebt, eine besonders effektive großflächige und zugfreie Abführung hoher Wärmelasten aus dem zu kühlenden Raum durch konvektiven Wärmetransport zu ermöglichen.

Ein wesentlicher Nachteil der bekannten Wärmetauscherelemente ist darin zu sehen, daß ihre Verwendbarkeit als Kühldeckenelemente deshalb begrenzt ist, weil ihre relativ große Bauhöhe entsprechend große lichte Zwischendeckenräume erfordert. Die Einsatzmöglichkeiten sind daher von relativ großen Geschoßhöhen abhängig.

Ein weiterer Nachteil der bekannten Wärmetauscherelemente zeigt sich, wenn deren Länge bei ansonsten üblicher Dimensionierung 2 m überschreitet. In diesen Fällen kommt es zu einem optisch unschönen Durchhängen der Wärmetauscherelemente, was sich nur durch besondere, aufwendige Vorkehrungen kompensieren läßt. Die bei Wärmetauscherelementen, welche eine Länge von 2 m überschreiten, erforderliche Unterstützung ist nicht nur sehr aufwendig, sondern wirkt sich in der Regel auch optisch nachteilig aus.

Schließlich besteht bei der bestimmungsgemäßen Anordnung der bekannten Wärmetauscherelemente die Gefahr, daß die kältesten Teilflächen der Elemente von Teilen benachbarter Elemente überdeckt werden. Der Strahlungswärmetausch zum Raum kann dabei gänzlich unterbunden werden oder nur unter sehr ungünstigen Einstrahlwinkeln möglich sein. Der Anteil des Strahlungswärmeaustausches an der Gesamtleistung ist folglich nicht optimal.

Der Erfindung liegt die Aufgabe zugrunde, ein Wärmetauscherelement der eingangs beschriebenen Art so auszubilden, daß es die vorstehend angesprochenen Nachteile nicht aufweist und sich insbesondere auch durch eine große Biegesteifigkeit auszeichnet, ohne zusätzliche, die Stabilität erhöhende Bauteile zu benötigen.

Ausgehend von einem Wärmetauscherelement der im Oberbegriff des Patentanspruchs 1 genannten Art, wird diese Aufgabe erfindungsgemäß durch die im kennzeichnenden Teil des Patentanspruchs 1 angegebenen Merkmale gelöst.

Das erfindungsgemäße Wärmetauscherelement erhält durch die Anordnung der die Strahlungsfläche bildenden Profilteile zueinander eine stemförmige Kontur und zeichnet sich infolgedessen durch eine hohe Biegesteifigkeit, eine geringe Bauhöhe und eine große Wärmeübertragungsfläche mit entsprechender Wärmeübertragungsleistung aus. Das Wärmetauscherelement läßt sich als Aluminium-Strangpreßprofil in Längen bis zu 4 m herstellen. Derartig lange Wärmetauscherelemente senken den Fertigungs-, Montage- und Installationsaufwand gegenüber konventionellen Wärmetauscherelementen erheblich.

Die Wärmeübertragungsflächen des erfindungsgemäßen Wärmetauscherelements sind wesentlich größer als dessen Projektionsfläche. Da das Wärmetauscherelement mit seinen kältesten Teilflächen direkt zum Aufenthaltsbereich des Raumes ausgerichtet werden kann, läßt sich ein großer Anteil Strahlungswärmeaustausch an der Gesamtleistung erzielen. Schließlich tragen die guten konvektiven Wärmeübertragungsbedingungen des erfindungsgemäßen Wärmetauscherelements zu der hohen Gesamtleistung bei.

Nach einer Ausgestaltung der Erfindung ist durch gegenüberliegende Längsrandstreifen der schalenförmigen Kontaktstücke mindestens eine Dehnungsfuge begrenzt.

Die im Aluminium-Strangpreßprofil vorgesehene Dehnungsfuge zwischen den schalenförmigen Kontaktstücken ermöglich es, diese unter Vorspannung gegen die Rohrleitung zu pressen, wozu die Rohrleitung vorzugsweise geringfügig aufgeweitet wird, nachdem das Wärmetauscherelement auf die Rohrleitung aufgeschoben worden ist.

Nach einer besonders vorteilhaften Ausgestaltung des erfindungsgemäßen Wärmetauscherelements sind zwei mit je einer dem Raum zugewandten Strahlungsfläche versehene Profilteile dachförmig zueinander angeordnet und an ihren divergierenden unteren Enden mit horizontal ausgerichteten Längsrandstreifen versehen.

Zur Vergrößerung der Strahlungsflächen kann darüber hinaus zwischen den dachförmig zueinander angeordneten Profilteilen in der Ebene der Winkelhalbierenden ein drittes Profilteil angeordnet werden, das vorzugsweise mit einem horizontal ausgerichteten Längsrandstreifen abschließt.

Nach einer weiteren Ausgestaltung des erfindungsgemäßen Wärmetauscherelements ist auf der dem dritten Profilteil gegenüberliegenden Seite der Rohrleitung ein an einem schalenförmigen Kontaktstück angeformter Hohlsteg vorgesehen, der mit dem dritten Profilteil fluchtet.

Der Hohlsteg umfaßt die Dehnungsfuge und ermöglicht es, in seinem oberen Ende einen in Längsrichtung des Profils verlaufenden Schraubkanal vorzusehen. Werden so ausgebildete Wärmetauscherelemente zwischen zwei gegenüberliegenden Rahmenschenkeln eines Rahmens angeordnet, wobei die Rahmenschenkel die Stimseiten der Profile abdecken, so lassen sich die Profile in einfacher Weise dadurch fixieren, daß durch entsprechend plazierte Bohrungen in den Rahmenschenkeln eingeführte Schraubenbolzen in die Schraubkanäle der Profile eingedreht werden.

Eine besonders vorteilhafte Ausgestaltung des erfindunsgemäßen Wärmetauscherelements sieht vor, daß drei je eine Strahlungsfläche bildende Profilteile Δ-förmig zueinander angeordnet sind.

Die Δ-förmige Anordnung der drei Strahlungsflächen des Profil verleiht diesem nicht nur eine große Biegesteifigkeit, sondem erhöht auch die Verwindungssteifigkeit des Profils außerordentlich.

Gemäß einer weiteren Ausgestaltung der Erfindung ist je eine Strahlungsfläche von zwei dachförmig zueinander ausgerichteten Profilteilen konkav und die Strahlungsfläche von einem horizontal ausgerichteten Profilteil über ein der Rohrleitung unmittelbar benachbartes Kontaktstück außenseitig konvex und über daran anschließende Seitenstücke außenseitig konkav ausgebildet.

Das unmittelbar dem Rohr benachbarte Kontaktstück mit den daran sich anschließenden Seitenstücken des im wesentlichen horizontal ausgerichteten Profilteils bildet die kältesten Teilflächen, die direkt dem Raum zugewandt sind. Dadurch läßt sich ein maximaler Anteil Strahlungswärmeaustausch an der Gesamtleistung erzielen.

Während das dem Aufenthaltsbereich eines Raumes zugewandte, im wesentlichen horizontal ausgerichtete Profilteil in unmittelbarem Kontakt mit dem Rohr steht und folglich die kältesten Teilflächen bildet, sind nach einer weiteren Ausgestaltung der Erfindung die zwei dachförmig zueinander angeordneten Profilteile über je ein Zwischenstück mit je einem schalenförmigen Kontaktstück verbunden. Über die Zwischenstücke, welche vorzugsweise bogenförmig verlaufen, lassen sich die schalenförmigen Kontaktstücke unter Vorspannung gegen die Rohrleitung pressen und begünstigen den Wärmeübergang von der Rohrleitung auf das Wärmetauscherelement.

Um auch Δ-förmig ausgebildete Wärmetauscherelemente verdrehfest auf einer Rohrleitung zwischen zwei Rahmenschenkeln fixieren zu können, sieht eine Ausgestaltung der Erfindung schließlich noch vor, daß in mindestens einem Eckbereich des Profils ein in Längsrichtung des Profils verlaufender Schraubkanal vorgesehen ist.

Durch Bohrungen in den Rahmenschenkeln eingeführte Gewindebolzen lassen sich wiederum in die Schraubkanäle eindrehen und verhindem dadurch eine unbeabsichtigte Verdrehung der Wärmetauscherelemente um die durch die Rohrleitung definierte Achse.

In der Zeichnung sind zwei Ausführungsbeispiele je eines erfindungsgemäßen Wärmetauscherelements im Querschnitt dargestellt. Es zeigt:
- Fig. 1: ein Wärmetauscherelement aus einem Aluminium-Strangpreß profil mit radial abstehenden Profilteilen
und
- Fig. 2: ein Wärmetauscherelement aus einem Aluminium-Strangpreßprofil mit Δ-förmig zueinander angeordneten Profilteilen.

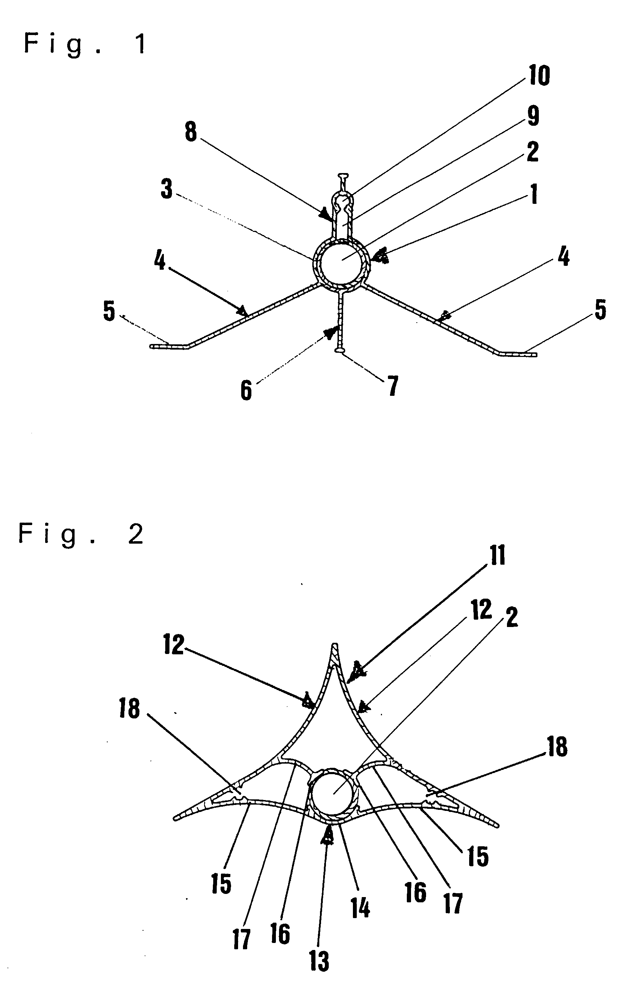

Das Wärmetauscherelement gemäß Fig. 1 besteht aus einem Aluminium-Strangpreßprofil 1, das koaxial auf eine Rohrleitung 2 aufgeschoben ist, die mit einem Wärmetauschermedium beaufschlagt wird.

Das Aluminium-Strangpreßprofil 1 weist ein schalenförmiges Kontaktstück 3 auf, das dem Außenradius der Rohrleitung 2 angepaßt ist. Vom Kontaktstück 3 gehen zwei dachförmig zueinander angeordnete Profilteile 4 aus, die an ihren divergierenden unteren Enden in horizontal ausgerichtete Längsrandstreifen 5 übergehen.

Zwischen den Profilteilen 4 ist in der Ebene der Winkelhalbierenden ein drittes Profilteil 6 angeordnet, das an seiner unteren Kante mit einem horizontal ausgerichteten Längsrandstreifen 7 abschließt.

Auf der dem dritten Profilteil 6 gegenüberliegenden Seite der Rohrleitung 2 ist am Kontaktstück ein Hohlsteg 8 angeformt, der eine Dehnfuge 9 einschließt. Diese ermöglicht eine elastische Aufweitung des Kontaktstückes 3 infolge einer Aufweitung der Rohrleitung 2, wodurch sich die vom Aluminium-Strangpreßprofil 1 auf die Rohrleitung 2 ausgeübte Anpreßkraft entsprechend erhöhen läßt.

Im oberen Endbereich des Hohlsteges 8 ist ein in Längsrichtung des Aluminium-Strangpreßprofils 1 verlaufender Schraubkanal 10 vorgesehen, in den sich zur Fixierung des Wärmetauscherelements innerhalb eines Rahmens ein von diesem ausgehender Gewindebolzen eindrehen läßt.

Das Wärmetauscherelement gemäß Fig. 2 besteht aus einem Aluminium-Strangpreßprofil 11, das gleichfalls koaxial auf eine mit einem Wärmetauschermedium beaufschlagbare Rohrleitung 2 aufgeschoben ist.

Das Aluminium-Strangpreßprofil 11 weist drei je eine Strahlungsfläche bildende Profilteile 12, 12 und 13 auf, die A-förmig zueinander angeordnet sind. Die dachförmig ausgerichteten Profilteile 12, 12 weisen konkave Strahlungsflächen auf, wogegen das im wesentlichen horizontal ausgerichtete Profilteil 13 als Strahlungsfläche ein der Rohrleitung unmittelbar benachbartes, außen konvexes Kontaktstück 14 und jeweils seitlich daran anschließende, konkave Seitenstücke 15 aufweist.

An jedem Profilteil 12 ist innenseitig ein Kontaktstück 16 über ein Zwischenstück 17 angeformt. Das innenseitig konkave Kontaktstück 14 des Profilteils 13 liegt unmittelbar gegen die Außenseite der Rohrleitung 2 an, so daß sich bei deren Aufweitung das Aluminium-Strangpreßprofil 11 zunehmend gegen die Rohrleitung 2 anpreßt.

Im Übergangsbereich von dem Profilteil 12 zu dem Profilteil 13 sind gleichfalls an dem Aluminium-Strangpreßprofil 11 in dessen Längsrichtung verlaufende Schraubkanäle 18 vorgesehen, in die sich wiederum zur Fixierung des Wärmetauscherelements innerhalb eines Rahmens von diesem Bauteil ausgehende Gewindebolzen eindrehen lassen.

## Patentansprüche

1. Wärmetauscherelement aus einem Aluminium-Strangpreßprofil, worin mindestens eine mit einem Wärmetauschermedium beaufschlagbare Rohrleitung integrierbar ist, deren Mittelachse sich in Längsrichtung des Profils erstreckt, das mindestens ein dem Außenradius der Rohrleitung angepaßtes, schalenförmiges Kontaktstück aufweist, gekennzeichnet durch mindestens ein an jedem Kontaktstück (3, 14, 16) auf seiner der Rohrleitung (2) abgewandten Seite angeformtes, eine Strahlungsfläche bildendes Profilteil (4, 6, 8 bzw. 12, 13), wobei der Verlauf von äußeren Längskanten der Profilteile durch die Eckpunkte eines Dreiecks definiert ist.

2. Wärmetauscherelement nach Anspruch 1, dadurch gekennzeichnet, daß durch gegenüberliegende Längsrandstreifen der schalenförmigen Kontaktstücke (3, 14, 16) mindestens eine Dehnfuge (9) begrenzt ist.

3. Wärmetauscherelement nach Anspruch 1 oder 2, dadurch gekennzeichnet, daß zwei mit je einer dem Raum zugewandten Strahlungsfläche versehene Profilteile (4) dachförmig zueinander angeordnet und an ihren divergierenden unteren Enden mit horizontal ausgerichteten Längsrandstreifen (5) versehen sind.

4. Wärmetauscherelement nach Anspruch 3, dadurch gekennzeichnet, daß zwischen den dachförmig zueinander angeordneten Profilteilen (4) in der Ebene der Winkelhalbierenden ein drittes Profilteil (6) angeordnet ist, das mit einem horizontal ausgerichteten Längsrandstreifen (7) abschließt.

5. Wärmetauscherelement nach Anspruch 4, dadurch gekennzeichnet, daß auf der dem dritten Profilteil (6) gegenüberliegenden Seite der Rohrleitung (2) ein an einem schalenförmigen Kontaktstück angeformter Hohlsteg (8) vorgesehen ist, der mit dem dritten Profilteil (6) fluchtet.

6. Wärmetauscherelement nach Anspruch 5, dadurch gekennzeichnet, daß im oberen Ende des Hohlsteges (8) ein in Längsrichtung des Profils (1) verlaufender Schraubkanal (10) vorgesehen ist.

7. Wärmetauscherelement nach Anspruch 1 oder 2, dadurch gekennzeichnet, daß drei je eine Strahlungsfläche bildende Profilteile (12, 12, 13) Δ-förmig zueinander angeordnet sind.

8. Wärmetauscherelement nach Anspruch 7, dadurch gekennzeichnet, daß je eine Strahlungsfläche von zwei dachförmig zueinander ausgerichteten Profilteilen (12, 12) konkav und die Strahlungsfläche von einem horizontal ausgerichteten Profilteil (13) über ein der Rohrleitung (2) unmittelbar benachbartes Kontaktstück (14) außenseitig konvex und über daran anschließende Seitenstücke außenseitig konkav ausgebildet ist.

9. Wärmetauscherelement nach Anspruch 8, dadurch gekennzeichnet, daß die zwei dachförmig zueinander angeordneten Profilteile (12) über je ein Zwischenstück (17) mit je einem schalenförmigen Kontaktstück (16) verbunden sind.

10. Wärmetauscherelement nach einem der Ansprüche 7 bis 9, dadurch gekennzeichnet, daß in mindestens einem Eckbereich des Profils (11) ein in Längsrichtung des Profils verlaufender Schraubkanal (18) vorgesehen ist.

## Claims

1. Heat exchanger element of an aluminium extrusion moulding profile into which is integrated at least one pipeline which is loaded by a heat exchanger medium, the centre axis of which extends in the longitudinal direction of the profile which comprises at least one cupshaped contact piece which is matched with the outside radius of the pipeline, **characterised by** at least one profile part (4, 6, 8 or 12, 13) which is formed onto each contact piece (3, 14, 16) at its side facing away from the pipeline (2) and establishes a radiation surface, and the course from the outer longitudinal edges of the profile parts is defined by the corner points of a triangle.

2. Heat exchanger element according to Claim 1, **characterised in that** at least one expansion gap (9) is defined by oppositely positioned longitudinal edge strips of the cupshaped contact pieces (3, 14, 16).

3. Heat exchanger element according to Claim 1 or 2, **characterised in that** two profile parts (4), which are each provided with a radiation surface with is facing the area, are configured rooflike relative to each other and are at their diverging lower ends provided with horizontally aligned longitudinal edge strips (5).

4. Heat exchanger element according to Claim 3, **characterised in that** between the profile parts (4), which are configured rooflike relative to each other, in the plane of the bisector of an angle is configured a third profile part (6) which terminates in a horizontally aligned longitudinal edge strip (7).

5. Heat exchanger element according to Claim 4, **characterised in that** at the side of the pipeline (2) positioned opposite the third profile part (6) is provided a hollow web (8), which is formed onto a cupshaped contact piece and which is flush with the third profile part (6).

6. Heat exchanger element according to Claim 5, **characterised in that** in the upper end of the hollow web (8) is provided a screw channel (10) which extends in the longitudinal direction of the profile (1).

7. Heat exchanger element according to Claim 1 or 2, **characterised in that** three profile parts (12, 12, 13), which each form a radiation surface, are A-shaped relative to each other.

8. Heat exchanger element according to Claim 7, **characterised in that** one each radiation surface is formed concave by two profile parts (12, 12), which are configured rooflike relative to each other, and the radiation surface is formed by a horizontally aligned profile part (13) via a contact piece (14), which is directly adjacent to the pipeline (2), externally convex and externally concave via thereto adjacent side pieces.

9. Heat exchanger element according to Claim 8, **characterised in that** the two profile parts (12), which are configured rooflike relative to each other, are joined to a respective cupshaped contact piece (16) via a respective intermediate piece (17).

10. Heat exchanger element according to one of Claims 7 to 9, **characterised in that** in at least one comer area of the profile (11) is provided a screw channel (18) which extends in the longitudinal direction of the profile.

## Revendications

1. Elément pour échangeur de chaleur, constitué d'un profilé extrudé d'aluminium, auquel peut être intégré au moins un conduit qui peut être alimenté en le milieu de l'échangeur de chaleur et dont l'axe médian s'étend dans la direction longitudinale du profilé, qui comporte au moins une pièce de contact en forme de coquille adaptée au rayon extérieur du conduit, caractérisé par au moins une partie (4,6,8 et 12,13) de profilé issue, du côté éloigné du conduit (2), de chaque pièce (3,4,16) de contact et formant une surface rayonnante, le tracé des bords longitudinaux extérieurs des parties du profilé étant défini par les sommets d'un triangle.

2. Elément pour échangeur de chaleur suivant la revendication 1, caractérisé en ce qu'il est délimité au moins un joint (9) de dilatation par des bandes marginales longitudinales opposées des pièces (3,14,16) de contact en forme de coquille.

3. Elément pour échangeur de chaleur suivant la revendication 1 ou 2, caractérisé en ce que deux parties (4) de profilé munies chacune d'une surface rayonnante tournée vers l'espace sont disposées en forme de toit l'une par rapport à l'autre et sont munies à leurs extrémités inférieures divergentes de bandes (5) marginales longitudinales dirigées horizontalement.

4. Elément pour échangeur de chaleur suivant la revendication 3, caractérisé en ce qu'il est prévu entre les parties (4) du profilé disposées en forme de toit l'une par rapport à l'autre, dans le plan de la bissectrice, une troisième partie (6) de profilé, qui se termine par une bande (7) marginale longitudinale dirigée horizontalement.

5. Elément pour échangeur de chaleur suivant la revendication 4, caractérisé en ce qu'il est prévu du côté du conduit (2) qui fait face à la troisième partie (6) du profilé une barrette (8) creuse issue d'une pièce de contact en forme de coquille et alignée avec la troisième partie (6) du profilé.

6. Elément pour échangeur de chaleur suivant la revendication 5, caractérisé en ce qu'il est prévu à l'extrémité supérieure de la barrette (8) creuse un canal (10) hélicoïdal s'étendant dans la direction longitudinale du profilé (1).

7. Elément pour échangeur de chaleur suivant la revendication 1 ou 2, caractérisé en ce que trois parties (12,12,13) de profilé formant chacune une surface rayonnante sont disposées en forme de Δ les unes par rapport aux autres.

8. Elément pour échangeur de chaleur suivant la revendication 7, caractérisé en ce que chaque surface rayonnante de deux parties (12,12) de profilé dirigées en forme de toit l'une par rapport à l'autre est réalisée de manière concave et la surface de radiation d'une partie (13) de profilé dirigée horizontalement est réalisée de manière convexe du côté extérieur sur une pièce (14) de contact directement voisine du conduit (2) et de manière concave du côté extérieur sur des pièces latérales qui s'y rattachent.

9. Elément pour échangeur de chaleur suivant la revendication 8, caractérisé en ce que les deux parties (12) de profilé disposées en forme de toit l'une par rapport à l'autre sont reliées par chacune une pièce (17) intermédiaire à chacune une pièce (16) de contact en forme de coquille.

10. Elément pour échangeur de chaleur suivant l'une des revendications 7 à 9, caractérisé en ce qu'il est prévu dans au moins une zone de sommet du profilé (11) un canal (18) hélicoïdal s'étendant dans la direction longitudinale du profilé.
